Europäisches Patentamt

European Patent Office

Office européen des brevets

(19)

(11) Publication number: **0 280 233 B1**

## EUROPEAN PATENT SPECIFICATION

(12)

(45) Date of publication of patent specification: **01.07.92**

(51) Int. Cl.5: **C04B 35/52**, D01F 11/10, D01F 9/14

(21) Application number: **88102568.8**

(22) Date of filing: **22.02.88**

(54) **Method for producing carbon-carbon composite materials.**

(30) Priority: **20.02.87 JP 35676/87**

(43) Date of publication of application:
**31.08.88 Bulletin 88/35**

(45) Publication of the grant of the patent:
**01.07.92 Bulletin 92/27**

(84) Designated Contracting States:
**DE FR GB**

(56) References cited:
**DE-A- 1 930 713**
**DE-A- 2 165 029**
**DE-A- 3 234 777**
**US-A- 4 554 024**

(73) Proprietor: **PETOCA LTD.**
**No. 3-6, Kioichi Chiyoda-ku**
**Tokyo 102(JP)**

(72) Inventor: **Takabatake, Minoru Kashima**
**Seiyusho**
**Kashima Oil Co.,Ltd. No.4 Touwada**
**Kamisucho Kashimagun Ibaraki-ken(JP)**

(74) Representative: **Kraus, Walter, Dr. et al**
**Patentanwälte Kraus, Weisert & Partner**
**Thomas-Wimmer-Ring 15**
**W-8000 München 22(DE)**

## Description

This invention relates to a method for producing carbon-carbon composite materials obtained by impregnating carbon fibers, as a reinforcement material, with a liquid carbonaceous material such as pitch or the like and then carbonizing the impregnated material and if necessary graphitizing the thus carbonized product.

More specifically, it relates to a method for producing, high density, high strength, carbon-carbon composite materials useful in mechanical parts, electric or electronic parts by taking advantage of their high strength, resistance to heat, corrosion and chemicals and hard wearing property.

It has been known that high density, high strength carbon-carbon composite materials can be produced by impregnating reinforcement material of high strength, high modulus carbon fibers wound up to a desired shape or structures formed by carbon fibers as a principal material, with as a precursor of a carbon matrix, liquid carbonaceous material such as a resin or a pitch, etc., carbonizing the impregnated material under the atmosphere of an inert gas and if necessary graphitizing the thus carbonized material.

However, fatal phenomena of cracking and detachment occurs on the boundary between reinforcement materials and carbon matrix and the mechanical strength of resultant carbon-carbon composite materials was falled.

On this account, a process of impregnating a product again with a liquid carbonaceous material such as a resin, a pitch or the like as a carbon matrix, precursor followed by carbonizing the thus reimpregnated material successively was repeated 5 - 6 times or more to effect a secondary reinforcement treatment and to obtain a high density, high strength, carbon-carbon composite materials.

In such production methods, since impregnation and carbonization steps are repeated, the production process becomes longer and more complicated. Moreover, there has been a further demerit that the cost of product becomes higher, because of extension of working time of an electric furnace during the step of carbonization.

Further a conventional carbon-carbon composite material is weak in the adhesiveness of boundary between carbon fibers as a reinforcement material and a carbon matrix. As an object of improving these drawback(s) and increasing the adhesiveness there has been taken a process in which the surfaces of carbon fibers are coated with various kinds of agents. However, there have been problems that heat treated products of the agent become an impurity in the resulting carbon-carbon composite material and reduces the purity as a carbon material and becomes a cause of lowering of resistance to chemicals and heat. It is disclosed in Japanese laid open patent application No. Sho 52-52912 that in order to solve the above-mentioned problem, it is effective to use an organic polymer, which is the same material as raw organic fibers for producing carbon fibers, for a liquid carbonaceous material as a precursor of carbon matrix; i.e. when polyacrylonitrile (PAN) based carbon fibers are used as a reinforcement material, the selection of a polyacrylonitrile resin is effective and when pitch based carbon fibers are used as a reinforcement material the selection of pitch is effective.

According to a method of Japanese laid open patent application No. Sho 52-52912, carbon matrix obtained by carbonizing a liquid carbonaceous substance as a precursor of carbon matrix, shows nearly the same property with the carbon fibers as a reinforcement material. In the case where carbonization and graphitization are necessary in the high temperature range, since the difference of thermal coefficient of expansion of the two, becomes extremely smaller, it provides a certain extent of effectiveness because the crack and detachment which occur on the boundary between the reinforcement material and carbon matrix during this process can be reduced.

However, a liquid carbonaceous material as a precursor of carbon matrix gives rise to volume shrinkage during the course of carbonization and graphitization. If rigid carbon fibers are present in the inside, the volume shrinkage of carbon matrix is not always a uniform one and this is a cause of generating crack and detachment on the boundary with the reinforcement material. Namely, since there is a large difference in orientation of carbon between that of carbon fibers as a reinforcement material and that of liquid carbonaceous material as a precursor of carbon matrix, there is formed a difference in each thermal property during the early stage of carbonization and generation of crack and detachment occurs and a secondary reinforcement treatment has been still necessary.

Winnacker Küchler; Chemische Technologie B.3, S. 306-307, 1983 relates inter alia to the manufacture of carbon or graphite fibers suitable for composite materials of high performance (for example for aircraft constructional parts) which are made by multiple impregnation and carbonization of fibrous textile structures.

DE-A-2 165 029 describes the manufacture:
- primarily of pitch-based carbon fibers, having linear shrinkage 15%, upon heating of pitch up to 250°C and
- further the fabrication of a carbon-carbon composite with high density (1.56 g/cm$^3$) and high strength by (one pass) impregnating the fibers or a laminated body (e.g. a structure made from said fibers) with phenol resin.

DE-A-1 930 713 describes the fabrication of shaped carbon-carbon composites having high strength by:
- the preparation of infusible carbon fibers at a temperature up to 260°C
- impregnation of wound, fibrous webs or other structures with (pitch or) resin
- carbonization and possibly graphitization in inert gas.

It is an object of the present invention to provide a carbon-carbon composite material superior in mechanical strength, resistance to heat and chemicals, hard wearing property by overcoming the above-mentioned drawbacks, namely by greatly reducing the fatal crack or detachment which occurs on the boundary of a reinforcement material and a carbon matrix during the early stage of carbonization in the production process of carbon-carbon composite material and improving the adhesiveness of the boundary between the reinforcement material and the carbon matrix.

Another object of the present invention is to provide a process for producing carbon-carbon composite materials easily in commercial scale and at inexpensive cost.

This invention resides in a method for producing a high density, high strength carbon-carbon composite material reinforced by carbon fibers which comprises impregnating pitch based carbonaceous fibers having been carbonized at a temperature lower than 2200°C or structures containing as a principal constituent said carbonized fibers with a liquid carbonaceous material, as a precursor of a carbon matrix and thereafter carbonizing or carbonizing followed by graphitizing the resulting impregnated product in an inert gas atmosphere, which is characterized in that there is a relationship of Sm-Sf = 0 ~ 45% between a volume shrinkage (Sf) of said pitch based carbonaceous fibers during the carbonization or carbonization followed by graphitization, carried out thereafter and a volume shrinkage (Sm) of said liquid carbonaceous material during the carbonization or carbonization followed by graphitization, carried out thereafter to enlarge the adhesiveness on the boundary of reinforcement material and carbon matrix.

The pitch based carbon fibers obtained from a raw material of petroleum pitch or coal pitch as a reinforcement material are impregnated with a liquid carbonaceous material such as pitch, i.e. petroleum pitch, coal pitch, a thermosetting resin such as phenol resin, furan resin or the like as a precursor of carbon matrix. Said carbonaceous fibers show volume shrinkage of 5 - 60%, preferably 10 - 50% by the carbonization or graphitization treatment carried out thereafter based upon the volume before treatment.

Further, said carbonaceous fibers have a tensile strength of 50 - 2500 MPa, an elongation of 0.5 - 8.0%, a tensile modulus of 4 - 400 GPa and further, a capability of increasing both tensile strength and tensile modulus up to 1.1 times or more of the values in the precedent step and up to a value of 400 GPa or more in the tensile modulus, by carbonization and graphitization carried out thereafter.

By the method according to the present invention it has become possible to mitigate the strain which becomes a cause of cracking and debonding, which are caused by shrinkage during the process of carbonization or carbonization and graphitization of a precursor of carbon matrix. In the present invention fatal crack and detachment occurring on the boundary between a reinforcement material and a carbon matrix are actually and extremely reduced.

Carbonaceous fibers, used in the present invention as a reinforcement material, are precursor fibers which becomes petroleum pitch based or coal pitch based high strength and high modulus carbon fibers. Said carbonaceous fibers or structure formed by using these fibers as principal constituent can develope a characteristic feature of exhibiting high strength and high modulus properties by carbonization or carbonization followed by graphitization carried out under tensionless state.

In case of carbon fibers in which a precursor is cellulose or PAN, it is necessary to increase strength and modulus by carrying out crystallization and orientation with tension. High strength, high modulus fibrous structures in which a precursor is cellulose or PAN can be made into structures such as woven fabrics only after these precursors have been carbonized or carbonized and graphitized under tension state. Whereas from carbonaceous fibers used as reinforced material in the present invention, high strength, high modulus fiber structure can be easily obtained by carbonization or carbonization followed by graphitization, even without applying tension after forming into structures at first. Accordingly, it is possible to make the difference of characteristic properties between carbon matrix precursor and reinforcement material smaller.

Accordingly, by the method according to the present invention, strain which is a cause of crack or detachment generated on the boundary of reinforcement material and carbon matrix which occurs attendently due to the volume shrinkage during the process of carbonization or carbonization followed by graphitization of carbon matrix precursor, can be mitigated. Thus it will become possible to produce high density, high strength carbon-carbon composite materials actually by reducing the generation of crack and

EP 0 280 233 B1

detachment to extremely smaller amount without applying a secondary reinforcement treatment.

Further, it is possible to enlarge the adhesiveness on the boundary of reinforcement material and carbon matrix, compared with conventional carbon-carbon composite material, by arranging the relation (of Sm-Sf) between volume shrinkage rate (Sf) during the process of carbonization or carbonization and graphitization of said carbonaceous fibers and volume, shrinkage rate (Sm) of a liquid carbonaceous material such as pitch or the like as a matrix carbon precursor, so as to fall in the range of 0 - 45%, preferably 0 - 20%. In case of the present invention it has become possible to obtain a large boundary adhesiveness even without coating any special surface treating agent upon the carbon fibers as reinforcement material and actually it is possible to produce carbon-carbon composite materials having high purity of carbon, and suprior in resistance to heat, chemicals and corrosion, etc. heat-resisting property, chemical-resisting property, corrosion-resisting property, etc.

As one of the superior properties of the present invention, simplification of the steps of impregnation, carbonization and graphitization can be mentioned. By using the method of the present invention, at the time of impregnation with a liquid carbonaceous material such as pitch or the like, followed by carbonization or carbonization and graphitization, there is no need of carrying out repeated steps of impregnation, carbonization or carbonization followed by graphitization i.e. a secondary reinforcement treatment is not necessary. It is possible to gain a nearly necessary density by one time treatment. This density is in the range of 1.45 - 2.05 g/cc when there is no hollow part to which impregnation is impossible, in the carbonaceous fibers as a reinforcement fibers.

As liquid carbonaceous material such as pitch or the like, used in the present invention, a certain intermediate pitch of raw materials for producing pitch based carbonaceous fibers carbonized at a temperature lower than 2200°C as reinforcement materials can be mentioned.

According to the process of the present invention, said carbonaceous fibers or structure formed by using these as a principal constituent which are arranged in a desired shape or a wound up form are impregnated with a liquid carbonaceous material, such as pitch or the like under a reduced pressure, under a pressurized state or under an alternately-reduced-pressurized state and if necessary, press-molding is applied. Then, in the atmosphere of an inert gas carbonization and if necessary graphitization is carried out under an atmospheric or superatmospheric pressure.

In order to increase resistivity to heat and chemicals and the like, it is preferable to carry out carbonization or carbonization and graphitization at a temperature higher than 1000°C.

More detailed explanation will be given to the present invention by way of specific examples but it is not intended to limit its scope.

Specific example 1

Petroleum pitch based carbonaceous fibers carbonized at a temperature of 500°C were unidirectionally aligned and petroleum pitch which was an intermediate pitch of raw material for producing the mentioned carbonaceous fibers (having a softening point of 150°C, a residual carbon of 53% by weight, and a density of 1.28) was caused to melt. After evacuation and impregnation under a reduced pressure of 266 - 1330 Pa (2 - 10 mmHg), substitution with argon gas was carried out. Subsequently, pressure was elevated up to 1 MPa and impregnation treatment was carried out under a pressurized state. Resulting sample was carbonized under the pressurized atmosphere of argon gas (15 MPa) by elevating temperature at a rate of 2.5°C per minutes up to 600°C (holding time was 2 hours).

Further carbonization was continued in the atmosphere of argon gas ($10^5$ Pa/1 atm) up to 2000°C.

The characteristic properties of thus obtained carbon-carbon composite material are shown below (volume percentage of carbon fibers, 56%)

| | |
|---|---|
| bulk density | 2.01 g/cc |
| flexual strength | 470 MPa |
| flexual modulus | 200 GPa |

The petroleum pitch based carbonaceous fibers carbonized at 500°C showed about 46% of volume shrinkage due to the dimensional changes in the both directions of fiber axis and fiber diameter, when they were carbonized up to 2000°C with no tension.

Further, the petroleum pitch used as matrix carbon precursor was carbonized under the pressurized atmosphere of argon gas (15 MPa) at a rate of 2.5°C per minute up to 600°C and further carbonized under the atmosphere of argon gas up to 2000°C, and resulting pitch-based carbon material showed ultimately carbon yield of 80% by weight and true density of 2.17 g/cc.

Accordingly, this means that this petroleum pitch showed about 52.8% of volume shrinkage during the process of carbonization up to 2000°C.

4

There was a difference of volume shrinkage of about 6.8% between the carbonaceous fibers as reinforcement material and the petroleum pitch as a precursor of carbon matrix, during the process of carbonization and graphitization step up to 2000°C.

When the cross-sectional surface of the sample of this specific example was observed by a polarized microscope, no crack and detachment were observed on the boundary between the reinforcement material and the carbon matrix.

Specific example 2

Petroleum pitch based carbonaceous fibers carbonized at a temperature of 1000°C were put in order by pulling in one direction and processed as in specific example 1 and a carbon-carbon composite material was thus prepared. The characteristic properties of this sample are shown below.

bulk density 1.83 g/cc
flexual strength 400 MPa
flexual modulus 200 GPa

The petroleum pitch based carbonaceous fibers carbonized at 1000°C indicated, when carbonized up to 2000°C under tensionless state, volume shrinkage of about 10.5% due to the dimensional changes in the both directions of fiber axis and fiber diameter.

The petroleum pitch used as a precursor of carbon matrix showed volume shrinkage of about 52.8% during the course of carbonization up to 2000°C similarly as in specific example 1.

Accordingly, the difference of volume shrinkage between the carbonaceous fibers as reinforcement material and the petroleum pitch as a precursor of carbon matrix during the process of carbonization carried out up to 2000°C was 42.3%.

The cross-sectional surface of the sample of this specific example was observed by a polarized microscope and there was no crack and detachment found.

Comparative example

Petroleum pitch based carbon fibers graphitized at a temperature of 2500°C were unidirectionally aligned and the petroleum pitch which was an intermediate pitch of raw material for producing the above carbon fibers (having a softening point of 150°C, a residual carbon of 53% by weight and a density of 1.28 g/cc) was caused to melt and carbon-carbon composite material was produced similarily as in specific example (sample No. 1). When the cross-sectional surface of this sample was observed by a polarized microscope, there were found cracks and detachments on the boundary of the reinforcement material and the carbon matrix. These cracks and detachments were observed already after carbonization under pressurized condition at 600°C.

One and two re-impregnations and re-carbonizations were applied to samples No. 1, to obtain two kinds of samples which were subjected to secondary reinforcement once and twice (a sample No. 2 and 3, respectively) The characteristic properties of each samples are shown in Table 1.

When the petroleum pitch based graphitized fibers at 2500°C used in the comparative example was carbonized again at 2000°C under tensionless state, there was observed no dimensional change in both the directions of fiber axis and fiber diameter and no change of volume. Namely, this means that the difference of volume shrinkage between the graphitized fibers as a reinforcement material and the petroelum pitch as a precursor of carbon matrix during the process of carbonization up to 2000°C was about 52.8%.

Table 1

| sample No. | 1 | 2 | 3 |
|---|---|---|---|
| bulk density (g/cc) | 1.43 | 1.68 | 1.76 |
| flexual strength (MPa) | 100 | 260 | 380 |
| flexual modulus (GPa) | 150 | 200 | 245 |

According to the method of the present invention, it has become possible to produce carbon-carbon composite material in which the generation of crack and detachment on the boundary of a reinforcement material and a carbon matrix is extremely small. Since carbonaceous fibers carbonized at lower temperature are used as a reinforcement material, it has becomes possible to reduce the cost of reinforcement material and to produce carbon-carbon composite material easily in commercial scale and at an inexpensive cost.

According to the method of the present invention, it is possible to cut off any secondary reinforcement treatment such as re-impregnation or the like in the production of carbon-carbon composite materials.

## Claims

1. A method for producing a high density, high strength carbon-carbon composite material reinforced by carbon fibers which comprises impregnating pitch based carbonaceous fibers having been carbonized at a temperature lower than 2200°C or structures containing as a principal constituent said carbonized fibers with a liquid carbonaceous material, as a precursor of a carbon matrix and thereafter carbonizing or carbonizing followed by graphitizing the resulting impregnated product in an inert gas atmosphere, characterized in that there is a relationship of Sm-Sf = 0 ~ 45% between a volume shrinkage (Sf) of said pitch based carbonaceous fibers during the carbonization or carbonization followed by graphitization, carried out thereafter and a volume shrinkage (Sm) of said liquid carbonaceous material during the carbonization or carbonization followed by graphitization, carried out thereafter to enlarge the adhesiveness on the boundary of reinforcement material and carbon matrix.

2. A method for producing a carbon-carbon composite material according to claim 1, characterized in that a carbon-carbon composite material having a bulk density of 1.45 ~ 2.05 g/cc is produced by one pass of impregnation of said fibers or structures with a liquid carbonaceous material, carbonization or carbonization followed by graphitization without repeating the secondary reinforcement process of impregnation and carbonization.

## Revendications

1. Une méthode de production d'un matériau composite carbone-carbone à résistance élevée et à densité élevée renforcé par des fibres de carbone, qui comprend l'imprégnation des fibres carbonées à base de brai ayant été carbonisées à une température inférieure à 2 200°C ou des structures contenant comme constituant principal lesdites fibres carbonisées, à l'aide d'un matériau carboné liquide, en tant que précurseur d'une matrice de carbone et ensuite la carbonisation ou la carbonisation suivie de la graphitisation du produit imprégné résultant dans une atmosphère de gaz inerte, caractérisée en ce qu'il existe une relation de Sm-Sf = 0 ~ 45 % entre le retrait volumique (Sf) desdites fibres carbonées à base de brai durant la carbonisation ou durant la carbonisation suivie de la graphitisation, conduite par la suite et le retrait volumique (Sm) dudit matériau carboné liquide durant la carbonisation ou la carbonisation suivie de la graphitisation, conduite par la suite pour élargir l'adhésivité à la périphérie du matériau de renforcement et de la matrice de carbone.

2. Une méthode de production d'un matériau composite carbone-carbone selon la revendication 1, caractérisée en ce qu'un matériau composite carbone-carbone ayant une masse volumique de 1,45 ~ 2,05 g/cc est produit par une passe d'imprégnation desdites fibres ou desdites structures par un matériau carboné liquide, carbonisation ou carbonisation suivie de graphitisation sans répéter le procédé secondaire de renforcement par imprégnation et carbonisation.

## Patentansprüche

1. Verfahren zur Herstellung eines Kohlenstoff-Kohlenstoff-Verbundmaterials mit hoher Dichte und hoher Festigkeit, das durch Kohlefasern verstärkt ist, durch Imprägnierung von kohlenstoffhaltigen Fasern auf Pechbasis, die bei Temperaturen unterhalb 2200°C carbonisiert worden sind, oder von Strukturen, die als Hauptbestandteil die genannten carbonisierten Fasern enthalten, mit einem flüssigen kohlenstoffhaltigen Material als Vorläufer einer Kohlematrix und anschließendes Carbonisieren oder Carbonisieren, an das ein Graphitisieren des resultierenden imprägnierten Produkts in einer inerten Gasatmosphäre folgt, dadurch **gekennzeichnet,** daß der Beziehung
Sm-Sf = 0 ~ 45% zwischen der Volumenschrumpfung (Sf) der genannten kohlenstoffhaltigen Fasern auf Pechgrundlage während der danach durchgeführten Carbonisierung oder Carbonisierung, an die sich eine Graphitisierung anschließt, und einer Volumenschrumpfung (Sm) des genannten flüssigen kohlenstoffhaltigen Materials während der Carbonisierung oder der Carbonisierung mit anschließender Graphitisierung, die danach durchgeführt wird, um die Klebfähigkeit auf der Grenze des Verstärkungsmaterials und der Kohlenstoffmatrix zu vergrößern, genügt wird.

2. Verfahren zur Herstellung eines Kohlenstoff-Kohlenstoff-Verbundmaterials nach Anspruch 1, dadurch **gekennzeichnet,** daß man ein Kohlenstoff-Kohlenstoff-Verbundmaterial mit einer Schüttdichte von 1,45 ~ 2,05 g/cm$^3$ durch einen Imprägnierungsdurchlauf der genannten Fasern oder Strukturen mit einem flüssigen kohlenstoffhaltigen Material herstellt und daß man eine Carbonisierung oder eine von einer Grapitisierung gefolgte Carbonisierung durchführt, ohne den sekundären Verstärkungsprozeß der Imprägnierung und Carbonisierung zu wiederholen.